# EUROPÄISCHE PATENTSCHRIFT

(11) **EP 2 230 086 B1**
(45) Veröffentlichungstag und Bekanntmachung des Hinweises auf die Patenterteilung: **26.10.2011**
(21) Anmeldenummer: 10004777.8
(22) Anmeldetag: 22.07.2008
(51) Int. Cl.: B41J 2/465, B41J 2/47, H04N 1/195

(54) **Verfahren zur Steigerung des Durchsatzes und zur Reduzierung der Bewegungsunschärfe**
Method for increasing throughput and reducing motion blur
Procédé d'augmentation du rendement et de réduction de la précision de déplacement

(30) Priorität: 17.08.2007 DE 102007038999
(43) Veröffentlichungstag der Anmeldung: 22.09.2010
(62) Teilanmeldung aus: 08784935.2
(73) Patentinhaber: Xeikon IP BV, 4529 GZ Eede (NL)
(72) Erfinder: Hedde, John, 21403 Wendisch Evern (DE); Ebeling, Guido, 23909 Ratzeburg (DE); Neber, Sascha, Dr., 21365 Adendorf (DE)
(74) Vertreter: Knoop, Philipp

(56) Entgegenhaltungen:
- DE-A1-102005 015 193
- US-A1- 2003 067 533
- US-B1- 6 504 567

## Beschreibung

Die vorliegende Erfindung betrifft ein Verfahren gemäß dem Anspruch 1.

Das gattungsgemäße Verfahren ist beispielsweise aus der DE 41 21 509 A1 bekannt. Derartige Verfahren sind insbesondere von Bedeutung für Prozesse, bei denen große Mengen von moduliertem Licht im blauen und ultravioletten Bereich benötigt werden, wie beispielsweise bei der Belichtung von Druckplatten, der Belichtung von gedruckten Schaltungen und bei der Stereolithografie. Das zugrundeliegende Prinzip ist, dass das lichtempfindliche Material kontinuierlich bewegt wird, während der Bildinhalt mit gleicher Geschwindigkeit in entgegengesetzte Richtung durch den Lichtmodulator gescrollt wird. Der Bildinhalt bleibt so annähernd ortsfest auf dem zu belichtenden Material. Die Belichtung baut sich durch Integration aller kurzen Einzelbelichtungen der Zellen einer Reihe auf. So werden Streifen mit einer der Anzahl der Reihen des Lichtmodulators entsprechenden Breite belichtet. Durch ein Aneinandersetzen mehrerer Streifen wird eine größere Fläche belichtet.

Problematisch bei diesem Belichtungsprinzip ist einerseits grundsätzlich die extrem große Datenmenge, welche pro Belichtungsschritt übertragen werden muss. Die Datenübertragungsrate zwischen einer ansteuernden Elektronik und dem Lichtmodulator ist hierbei naturgemäß begrenzt. Als Lichtmodulator werden zum Beispiel zweidimensionale Mikrospiegelzeilen (DMD_{TM}), Flüssigkristallanzeigen, Beugungsgitter, Lichtventile oder reflektierende Flüssigkristallzeilen (LCOS) verwendet. Wenn die zu belichtenden Druckplatten ausreichend empfindlich sind und/oder wenn der von der Lichtquelle zur Verfügung gestellte Strahlungsfluss eine bestimmte Größe erreicht, wird der Durchsatz einer gattungsgemäßen Vorrichtung, gemessen in Anzahl belichteter Druckplatten pro Stunde oder in belichtete Quadratmeter pro Stunde begrenzt durch die Datenrate, mit der Daten zum Display übertragen werden können. Die Datenrate ist bei den herkömmlichen gattungsgemäßen Scrollingverfahren limitierend für den Durchsatz, da der komplette Lichtmodulator jedes Mal neu beschrieben werden muss, wenn das Bild um eine Reihe weitergeschaltet wird.

Um den Durchsatz dennoch zu erhöhen, wurde beispielsweise in der DE 10 2005 015 193 A1 vorgeschlagen, die Anzahl der vom Lichtmodulator tatsächlich benutzten und angesteuerten Zeilen gegenüber der Anzahl physisch vorhandener Zeilen zu verringern. Nachteilig hieran ist jedoch, dass die Etendue des Systems verringert wird, was wiederum die Größe des Strahlungsflusses verringert.

Ein weiteres Problem beim herkömmlichen Scrollingverfahren der eingangs genannten Art ist, dass die Relativbewegung zwischen dem Lichtmodulator und dem lichtempfindlichen Material eine kontinuierliche Bewegung ist, wohingegen die Bewegung der Datenmuster auf dem Lichtmodulator eine sprunghafte Bewegung ist. Letzteres ist darauf zurückzuführen, dass die Bewegung, also das Scrollen, des Datenmusters über den Lichtmodulator nur in diskreten Schritten erfolgen kann, wobei die Schrittweite durch die Anzahl der Reihen und die Breite der lichtmodulierenden Zellen vorgegeben ist. Die Datenmuster bewegen sich also nicht kontinuierlich über den Lichtmodulator, sondern werden stattdessen in einer Reihe während einer Haltezeit, während derer sich das Datenmuster nicht bewegt, angezeigt und springen anschließend quasi abrupt zur benachbarten Reihe. Infolgedessen kann die Abbildung eines gegebenen Datenmusters nur im Mittel stationär relativ zu dem lichtempfindlichen Material gehalten werden. De facto bewegt sich jedoch die Abbildung des Datenmusters während der Haltezeit auf dem lichtempfindlichen Material mit einer Geschwindigkeit, welcher der Relativgeschwindigkeit zwischen dem Lichtmodulator und dem lichtempfindlichen Material entspricht. Diese Bewegung der Abbildung des Datenmusters während der Haltezeiten führt gemäß dem Stand der Technik ohne weitere Vorkehrungen zu einer prinzipiell bedingten Unschärfe der Belichtung von der Breite einer lichtmodulierenden Zelle des Lichtmodulators.

In der DE 41 21 509 A1 wurde daher vorgeschlagen, dass die Abbildung des Lichtmodulators auf dem zu belichtenden Material mithilfe einer Linse derart verkleinert wird, dass die belichtete Fläche auf dem zu belichtenden Material aufgrund der Verschmierung im Ergebnis wieder die Originalgröße erhält. Nachteilig hieran ist jedoch, dass die Auslegung der Verkleinerungsoptik unter Umständen problematisch sein kann, insbesondere, wenn die Relativgeschwindigkeit zwischen dem zu belichtenden Material und dem Lichtmodulator sowie die Haltezeit variiert werden sollen bzw. müssen. Im Prinzip müsste in diesen Fällen die Verkleinerungslinse an die neuen Parameter angepasst werden. Dies ist jedoch mit Nachteil nur mit vergleichsweise aufwendigen zusätzlichen optischen Komponenten möglich.

Der vorliegenden Erfindung liegt daher die Aufgabe zugrunde, den Durchsatz bei dem gattungsgemäßen Verfahren zu erhöhen. Gemäß einem anderen Aspekt der Erfindung ist es Aufgabe, das Verfahren der eingangs genannten Art so zu verbessern, dass eine Variierung des Durchsatzes vorgenommen werden kann, ohne dass eine Verschmierung der Abbildung des Lichtmodulators auf dem lichtempfindlichen Material auftritt.

Erfindungsgemäß wird diese Aufgabe dadurch gelöst, dass bei einem Verfahren der eingangs genannten Art die Abbildung des Datenmusters während der Haltezeit relativ zu dem lichtempfindlichen Material im Wesentlichen stationär gehalten wird. Durch diese Maßnahme ist es möglich, die Verschieberate des Datenmusters über die Reihen des Lichtmodulators zur Erhöhung des Durchsatzes zu vermindern. Durch eine Verminderung dieser Verschieberate vermindert sich die zu übertragende Datenmenge, und es ist möglich, eine höhere Relativgeschwindigkeit zwischen dem Lichtmodulator und dem lichtempfindlichen Material zu wählen, wodurch der Durchsatz erhöht wird. Dadurch, dass erfindungsgemäß die Abbildung des Datenmusters während der auf die beschriebene Weise verlängerten Haltezeit relativ zu dem lichtempfindlichen Material im Wesentlichen stationär gehalten wird, erfolgt dennoch keine Verschmierung der Abbildung auf dem lichtempfindlichen Material. Es kann somit mit Vorteil die zu übertragende Datenrate herabgesetzt werden, was zur Erhöhung des Durchsatzes führt, ohne dass Qualitätsverluste bei der Belichtung auftreten.

Die der Erfindung zugrundeliegende Aufgabe wird außerdem durch ein Verfahren der eingangs genannten Art gelöst, bei dem die Verschieberate so gewählt ist, daß der Quotient aus der Relativgeschwindigkeit und dem Produkt der Verschieberate und der Höhe der lichtmodulierenden Zellen mindestens zwei, insbesondere zwei, beträgt. Hierdurch wird mit Vorteil die Datenrate zum Display vermindert, insbesondere halbiert. Dies ist darauf zurückzuführen, daß das Datenmuster erfindungsgemäß nur jede zweite bzw. jede N-te, wobei N > 2, Zeile aktualisiert wird. Der Durchsatz läßt sich mit Vorteil erhöhen, da bei gegebener maximaler Datenübertragungsrate die Relativgeschwindigkeit hochgesetzt werden kann. Der Belichtungsvorgang kann somit mit Vorteil in einer Art "Hochgeschwindigkeitsmodus" durchgeführt werden.

In vorteilhafter Ausgestaltung der Erfindung ist vorgesehen, dass die Relativbewegung zwischen dem Lichtmodulator und dem lichtempfindlichen Material während der Haltezeit im Wesentlichen ausgeglichen wird. Durch diese Maßnahme ist es möglich, die Haltezeit zu erhöhen, ohne dass eine Verschmierung der Abbildung des Lichtmodulators auf dem Druckmaterial entsteht.

Wenn in bevorzugter Ausgestaltung der Erfindung die Abbildung des Datenmusters relativ zum Lichtmodulator mit einem periodischen Bewegungsprofil bewegt wird, ist es mit Vorteil möglich, die Relativbewegung zwischen dem Lichtmodulator und dem lichtempfindlichen Material besonders wirkungsvoll auszugleichen während der Haltezeiten. Hiermit kann beispielsweise eine Aktualisierung des auf dem Lichtmodulator abgebildeten Datenmusters nur jede zweite Reihe erfolgen. Hierdurch wird die Datenrate zum Lichtmodulator halbiert. Dennoch bleibt die volle Auflösung erhalten, ohne dass die beim herkömmlichen Scrollingverfahren auftretende Verschmierung auftritt.

Das erfindungsgemäße Verfahren wird noch verbessert, wenn das Bewegungsprofil eine flach ansteigende Flanke und eine steil abfallende Flanke, insbesondere eine Sägezahnform aufweist. Im Prinzip wird der konstanten Relativbewegung zwischen dem Lichtmodulator und dem photosensitiven Material eine zusätzliche Bewegung der Abbildung des Lichtmodulators relativ zur gesamten Belichtungseinheit als Inertialsystem überlagert. Durch die flach ansteigende Flanke wird erreicht, dass die Relativbewegung der Abbildung des Lichtmodulators und dem zu belichtenden photosensitiven Material die meiste Zeit Null ist, also vollständig aufgehoben wird. Wenn also beispielsweise die Relativbewegung zwischen Lichtmodulator und zu belichtendem Material derart realisiert ist, dass der Lichtmodulator über das in der Belichtungseinheit fixierte lichtempfindliche Material verfahren wird, wird das Bild aufgrund des Bewegungsprofils während der Haltezeit auf dem zu belichtenden Druckmaterial stationär gehalten, obwohl der Lichtmodulator sich weiterhin gegenüber der Druckplatte bewegt. Die zusätzlich überlagerte periodische, insbesondere sägezahnförmige, Bewegung wirkt somit während der Haltezeit dieser Relativbewegung entgegen. Die flach ansteigende Flanke des Bewegungsprofils in der Ort-Zeit-Darstellung erzeugt hierbei eine Relativbewegung der Abbildung relativ zum Lichtmodulator, welche der Relativbewegung zwischen Lichtmodulator und Druckplatte diese kompensierend entgegengesetzt ist. Während der Flanken des Sägezahns wird erfindungsgemäß in möglichst kurzer Zeit, idealerweise in unendlich kurzer Zeit, die Abbildung des Lichtmodulators auf der Druckplatte sprunghaft auf die Grundstellung zurückgestellt zur Vorbereitung auf das Überspringen des Datenmusters auf die nächste Datenreihe auf dem Lichtmodulator.

Besonders vorteilhaft ist es in Ausgestaltung der Erfindung, wenn das Bewegungsprofil mit der Verschiebung der Datenmuster zwischen den Reihen synchronisiert wird, wobei insbesondere die flach ansteigende Flanke während der Haltezeit ausgeführt wird.

Da es praktisch nicht möglich ist, eine unendlich schnelle Bewegung zu erzeugen, werden die steil abfallenden Flanken im Orts-Zeit-Diagramm nicht senkrecht sein können. Wenn daher in spezieller Ausgestaltung der Erfindung die Lichtquelle während der steil abfallenden Flanken ausgeschaltet wird, wird mit Vorteil erreicht, dass auch während der steil abfallenden Flanken im Bewegungsprofil keine Verschmierung der Abbildung auf dem Druckmaterial auftritt. Durch diese Maßnahme könnte im Rahmen der Erfindung auch ein periodisches Bewegungsprofil gewählt werden, welches keine steil abfallende Flanke aufweist. Beispielsweise kann die abfallende Flanke betragsmäßig die gleiche Steigung haben wie die ansteigende Flanke.

Bei einer anderen vorteilhaften Ausführungsform des erfindungsgemäßen Verfahrens werden alle lichtmodulierenden Zellen während der steil abfallenden Flanke inaktiv geschaltet. Auch durch diese Maßnahme wird ein Verschmieren der Abbildung des Lichtmodulators auf dem Druckmaterial selbst während der abfallenden Flanken verhindert. Dies auch dann, wenn die abfallende Flanke in der Praxis eine endliche zeitliche Breite aufweist. Die Wirkung dieser Maßnahme ist daher im Ergebnis die gleiche wie das Ausschalten der Lichtquelle während der abfallenden Flanke.

Erfindungsgemäß kann der Lichtmodulator mechanisch bewegt, insbesondere gekippt und/oder verschoben, werden, um die Abbildung des Datenmusters zu bewegen. Auf diese Weise lässt sich mit Vorteil eine Relativbewegung zwischen der Abbildung des Lichtmodulators auf der Druckplatte und dem Lichtmodulator selber erzeugen. Durch die mechanische Bewegung des Lichtmodulators erhält das System einen zusätzlichen Freiheitsgrad, welcher es ermöglicht, die Abbildung des Lichtmodulators prinzipiell relativ zum Lichtmodulator sowie relativ zur Druckplatte unabhängig von der konstanten Relativbewegung zwischen Lichtmodulator und Druckplatte zu bewegen.

Gemäß einer anderen bevorzugten Ausführungsform des erfindungsgemäßen Verfahrens wird der Abbildungsstrahlengang verschoben, um die Abbildung des Datenmusters zu bewegen. Eine Verschiebung des Abbildungsstrahlengangs lässt sich durch Einfügen eines geeigneten optischen Elementes im Strahlengang zwischen Lichtmodulator und Druckplatte erzeugen, ohne dass der Lichtmodulator selber bewegt werden muss.

In weiterer Ausgestaltung dieser Variante des erfindungsgemäßen Verfahrens wird eine elektrische Spannung unter Ausnutzung eines elektrooptischen Effekts, insbesondere des Kerr-Effekts, variiert, um den Abbildungsstrahlengang zu verschieben. Zum Beispiel kann eine Kerr-Zelle in den Abbildungsstrahlengang eingefügt werden, welche mit einer variablen Spannung betrieben wird. Hierbei werden die optischen Eigenschaften, insbesondere die Brechzahl, der Kerr-Zelle durch die anliegende elektrische Spannung verändert. Der Vorteil dieser Maßnahme ist, dass keine mechanisch beweglichen Teile erforderlich sind, um die erfindungsgemäße Bewegung der Abbildung des Datenmusters relativ zum Lichtmodulator zu generieren.

Alternativ und/oder zusätzlich kann erfindungsgemäß ein Umlenkspiegel und/oder eine Linse und/oder ein Prisma und/oder eine Keilplatte mechanisch bewegt werden, um den Abbildungsstrahlengang zu verschieben. Die genannten optischen Elemente werden im Abbildungsstrahlengang zwischen Lichtmodulator und Druckplatte angeordnet.

Erfindungsgemäß kann auch ein dispersives Element im Abbildungsstrahlengang angeordnet werden und die Wellenlänge der Lichtquelle moduliert werden, um den Abbildungsstrahlengang zu verschieben. Zum Beispiel kann ein Gitter oder ein Prisma in den Abbildungsstrahlengang derart eingebracht werden, dass die Bildposition des Lichtmodulators auf dem zu belichtenden Druckmaterial von der exakten Wellenlänge des von der Lichtquelle emmitierten Lichts abhängen. Die Wellenlänge des von der Lichtquelle emmitierten Lichts wird dann zweckmäßig zur Erzeugung des gewünschten Bewegungsprofils der Abbildung des Lichtmodulators relativ zum Lichtmodulator moduliert. Diese Ausführungsform hat den Vorteil, dass keine mechanisch beweglichen Teile zur Erzeugung der periodischen Bewegung notwendig sind.

Eine andere bevorzugte Ausführungsvariante des erfindungsgemäßen Verfahrens sieht vor, dass das lichtempfindliche Material mechanisch bewegt wird, um die Abbildung des Datenmusters zu bewegen. Beispielsweise kann in Systemen, bei denen der Lichtmodulator über der Druckplatte verfahren wird, die zusätzliche periodische Bewegung durch periodisches Bewegen der Druckplatte hervorgerufen werden. In diesem Fall wird die Relativbewegung zwischen Lichtmodulator und zu belichtendem Material bei geeigneter Wahl des Bewegungsprofils der Druckplatte während der Haltezeiten aufgehoben, sodass das Abbild des Lichtmodulators auf der Druckplatte stationär gehalten wird während der Haltezeit. Dies ist eine prinzipiell alternative Ausführung zu der Ausführung weiter oben, gemäß derer das Abbild des Lichtmodulators relativ zum Lichtmodulator bewegt wird. Die Ausführungsformen sind jedoch auch kombinierbar im Rahmen der Erfindung.

Gemäß einer vorteilhaften Variante des Verfahrens nach der Erfindung wird die Haltezeit kleiner gewählt als der Kehrwert der Verschieberate. Auf diese Weise kann ohne eine mechanische Bewegung, wie bei den zuvor beschriebenen Ausführungsbeispielen, und auch ohne eine Verkleinerung der Abbildung des Lichtmodulators, wie im oben gewürdigten Stand der Technik, erreicht werden, dass eine Verschmierung des Abbildes aufgrund der Relativbewegung während der Haltezeit im Wesentlichen praktisch vermieden wird. Aufwendige Maßnahmen zum Ausgleich der Bewegung während der Haltezeit oder zur Verkleinerung der Abbildung können daher mit Vorteil mitunter entbehrlich sein. Voraussetzung ist, dass eine ausreichend starke Lichtquelle mit entsprechendem Lichtstrom verwendet wird, sodass eine Verkürzung der effektiven Belichtungszeit dennoch zu einer vollständigen Belichtung führt. Gemäß dem Stand der Technik entspricht demgegenüber die Haltezeit im Wesentlichen dem Kehrwert der Verschieberate.

Bei einer anderen günstigen Ausgestaltung des erfindungsgemäßen Verfahrens wird die Lichtquelle gepulst betrieben und/oder der Lichtmodulator periodisch inaktiv geschaltet, um die Haltezeit zu reduzieren.

Wenn das Verfahren gemäß dem Anspruch 1 zusätzlich nach einem der Ansprüch 2 bis 16 ausgestaltet ist, läßt sich der Durchsatz erhöhen bei gleichzeitiger Beibehaltung einer im wesentlichen verschmierungsfreien Qualität. Die erfindungsgemäße Erhöhung des Durchsatzes durch Herabsetzung der zu übertragenden Datenmenge wird also gemäß dieser Ausgestaltung der Erfindung kombiniert mit den oben beschriebenen Maßnahmen zur Kompensierung der Verschmierung.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: eine schematische Darstellung der vollständigen Belichtungs- und Modulationsvorrichtung;
- Fig. 2:: eindimensionale Darstellung der Position des Belichtungsmusters auf einem Druckbogen zu verschiedenen Zeitpunkten t₁, t₂, ... t₆, sowie der zeitlich kumulierten Belichtung bei Belichtung gemäß Stand der Technik;
- Fig. 3:: eindimensionale Darstellung der Position des Belichtungsmusters auf einem Druckbogen zu verschiedenen Zeitpunkten t₁, t₂, ... t₁₀, bei Belichtung gemäß einem Aspekt der Erfindung mit einer gegenüber Fig. 2 halbierten Datenübertragungsrate zum Lichtmodulator;
- Fig. 4:: Diagramm zur schematischen Veranschaulichung des zeitlichen Verlaufs der Position des Bildes des Lichtmodulators bei erfindungsgemäßer Belichtung in Darstellungen (a) relativ zum Lichtmodulator, (b) relativ zur Position des Lichtmodulators sowie (c) relativ zum Druckbogen.

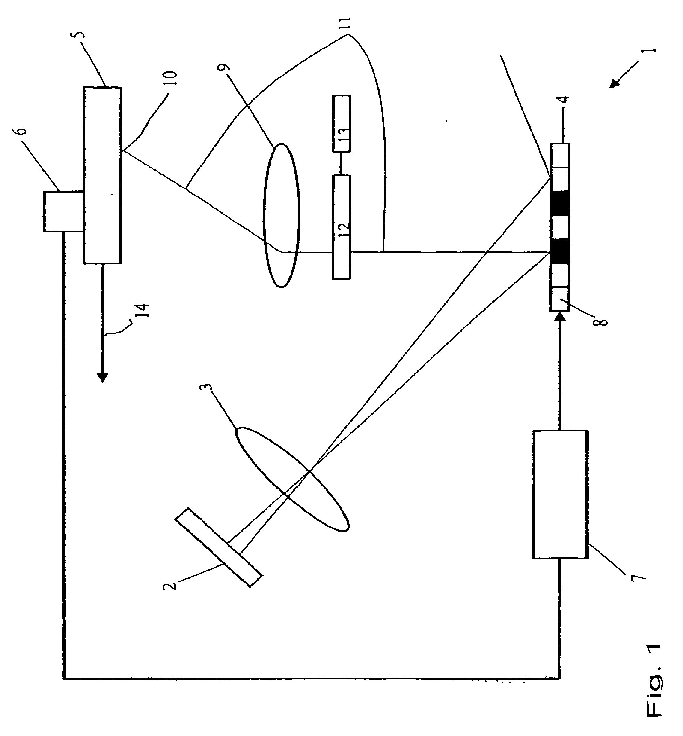

In Fig. 1 ist schematisch eine Belichtungs- und Modulationsvorrichtung 1 gezeigt. Eine Lichtquelle 2 wird unter Verwendung einer ersten Linse 3 auf einem zweidimensionalen Lichtmodulator 4 abgebildet. Der Lichtmodulator ist eine Mikrospiegelmatrix (DMD®) mit in Reihen und Zeilen angeordneten, individuell kippbaren Mikrospiegeln, die jeweils als Lichtventil wirken. Die Reihen der Mikrospiegelmatrix verlaufen senkrecht in die Zeichenebene hinein, wohingegen die Zeilen in der Zeichenebene verlaufen. Entsprechend ist in Fig. 1 eine Zeile bestehend aus sieben Reihen zu erkennen.

Die Position des lichtempfindlichen Materials 5 relativ zum Lichtmodulator 4 ist durch eine Positioniereinrichtung 6 veränderbar. Die Relativbewegung erfolgt in Richtung parallel zu den Zeilen des DMD 4, also senkrecht zu den Reihen. Datenmuster werden unter Verwendung einer Treiberschaltung 7 in die erste Spalte mit Zellen 8 des Lichtmodulators 4 übertragen. Wichtig hierbei ist die Synchronisation der Datenmusterübertragung und der Relativbewegung zwischen Lichtmodulator 4 und lichtempfindlichem Material 5. Das in die erste Reihe übertragene Datenmuster wird dort während einer Haltezeit angezeigt. Die Haltezeit entspricht im Wesentlichen dem Kehrwert der Bildrate, mit welcher Daten auf dem Lichtmodulator 4 aktualisiert werden. Anschließend wird das Datenmuster von der ersten Reihe in Richtung der Relativbewegung in die nächste Reihe verschoben, so dass das auf das lichtempfindliche Material 5 übertragene Datenmuster im Wesentlichen ortsfest auf diesem verbleibt. Der Lichtmodulator 4 besteht aus mehreren Reihe von Zellen 8. Das auf den Lichtmodulator 4 übertragene Datenmuster besteht aus Kombinationen von aktivierten und inaktivierten Zellen 8. Werden die Zellen 8 aktiviert, wird das auf sie fallende Licht über eine zweite Linse 9 auf das lichtempfindliche Material 5 übertragen. Das Licht, das auf inaktive Zellen trifft, wird vom lichtempfindlichen Material 5 weggelenkt.

Die Abbildung eines auf den Zellen 8 einer Reihe des Lichtmodulators 4 angezeigten Datenmusters auf dem lichtempfindlichen Material 5 ist mit der Bezugsziffer 10 gekennzeichnet. Die Belichtungs- und Modulationsvorrichtung 1 ist allgemein stationär. Die oben beschriebenen prinzipiellen Bauteile der Belichtungs- und Modulationsvorrichtung 1 entsprechen den im Stand der Technik eingesetzten. Zusätzlich zu den bekannten Bauteilen weist die in Figur 1 dargestellte Belichtungs- und Modulationsvorrichtung 1 im Abbildungsstrahlengang 11 zwischen dem Lichtmodulator 4 und dem lichtempfindlichen Material 5 eine nur schematisch dargestellte Kerr-Zelle 12 auf. Die Kerr-Zelle 12 ist über eine variable Spannungsquelle 13, die hier ebenfalls nur schematisch angedeutet ist, ansteuerbar. Die Kerr-Zelle 12 ist in der Figur 1 exemplarisch im Abschnitt zwischen dem Lichtmodulator 4 und der Linse 9 des Abbildungsstrahlengangs 11 angeordnet. Es ist jedoch auch denkbar, dass die Kerr-Zelle 12 in dem Abschnitt zwischen der Linse 9 und dem lichtempfindlichen Material 5 des Abbildungsstrahlengangs 11 angeordnet ist.

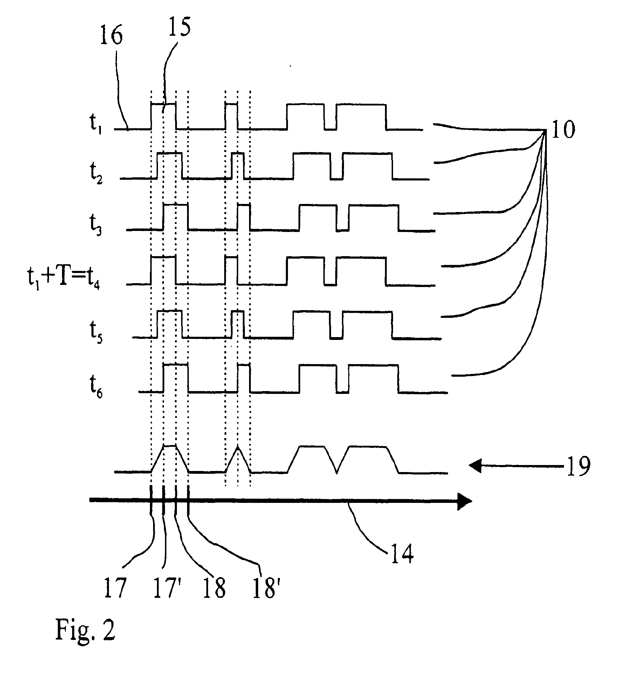

In Figur 2 ist zur Veranschaulichung des Nachteils herkömmlicher Belichtungs- und Modulationsvorrichtungen in einem Diagramm schematisch die Ortsposition der Abbildung 10 des auf dem Lichtmodulator 4 angezeigten Datenmusters dargestellt. In dem Diagramm ist in horizontaler Richtung eine Ortsachse 14 in Richtung der durch die Positioniereinrichtung 6 aufgeprägten Relativbewegung des lichtempfindlichen Materials 5 dargestellt. Oberhalb der Ortsachse 14 des lichtempfindlichen Materials 5 ist die Abbildung 10 des auf dem Lichtmodulator 4 angezeigten Datenmusters zu verschiedenen Zeitpunkten t₁, t₂, ..., t₆ dargestellt. Bei jedem Belichtungsmuster sind beleuchtete Abschnitte 15 durch ein digital "1" Signal angezeigt, wohingegen unbeleuchtete Abschnitte 16 durch ein digital "Null" Signal veranschaulicht sind. Das Belichtungsmuster t₁ ist in der obersten Zeile oberhalb der Ortsachse 14 veranschaulicht. In der darunter folgenden Zeile ist das Belichtungsmuster auf dem Druckbogen 5 zu einem Zeitpunkt t₂ dargestellt, wobei t₂=t₁+Δt gilt, mit Δt<T, wobei T gleich die Haltezeit ist. Wie zu erkennen, ist das Belichtungsmuster t₂ gegenüber dem Belichtungsmuter t₁ geringfügig nach rechts auf der Ortsachse 14 verschoben. Dies ist deutlich zu erkennen an den verschobenen Positionen der beleuchteten Abschnitte 15. Da sich der Lichtmodulator 4 und die Druckplatte 5 mit einer konstanten Geschwindigkeit relativ zueinander bewegen, tritt die veranschaulichte Verschiebung der beleuchteten Abschnitte 15 auf der Ortsachse 14 auf der Druckplatte 5 während der Haltezeiten auf.

Das Belichtungsmuster t₃ entspricht dem auf der Druckplatte 5 angezeigten Belichtungsmuster, also der Abbildung 10 des Lichtmodulators 4, zu einem Zeitpunkt t₃, wobei t₃-t₁<T, mit der Haltezeit T des Datenmusters auf dem Lichtmodulator 4. Wie zu erkennen, ist bei dem Belichtungsmuster t₃ eine weitere Verschiebung entlang der Ortsachse 14 der beleuchteten Abschnitte 15 zu beobachten. Die Anfangsposition 17 des beleuchteten Abschnitts 15 ist zum Zeitpunkt t₃ auf der Ortsachse 14 zu der verschobenen Anfangsposition 17' verschoben auf der Druckplatte 5. Ebenso ist die Endposition 18 des Belichtungsmusters t₁ zum Zeitpunkt t₃ entsprechend dem Belichtungsmuster t₃ auf die verschobene Endposition 18' verschoben auf der Druckplatte 5.

Zum Zeitpunkt t₄, wobei t₄=t₁+T, ist der beleuchtete Abschnitt 15 auf der Ortsachse 14 des Druckbogens 5 wieder zwischen der ursprünglichen Anfangsposition 17 und ursprünglichen Endposition 18 entsprechend dem Belichtungsmuster t₁ angeordnet. Auf dem Lichtmodulator 4 ist das Datenmuster zwischen dem Zeitpunkt t₃ und dem Zeitpunkt t₄ auf benachbarte Reihe umgesprungen. Das Belichtungsmuster tj entspricht daher exakt dem Belichtungsmuster t₁.

Die Belichtungsmuster t₅, t₆ entsprechen den Belichtungsmustem t₂ bzw. t₃, um zu veranschaulichen, dass sich der Vorgang wiederholt. Wieder tritt eine Verschiebung des beleuchteten Abschnitts 15 auf der Ortsachse 14 des Druckmaterials 5 während der Haltezeit T, während derer ein Datenmuster auf dem Lichtmodulator 4 gehalten wird. Die Verschiebung ist zurückzuführen auf die konstante Relativbewegung zwischen Lichtmodulator 4 und Druckbogen 5.

Wie in dem untersten Belichtungsmuster der Figur 2 zu erkennen, entspricht die kumulierte Dosis 19 der Belichtung auf dem Druckbogen 5 nicht exakt dem Belichtungsmuster t₁, welches der Abbildung 10 des Lichtmodulators 4 auf dem Druckbogen 5 entspricht. Stattdessen ist die kumulierte Dosis 19 gegenüber den Belichtungsmustern t₁, ..., t₆ aufgrund der Verschiebung während der Haltezeit beim Stand der Technik mit Nachteil verschmiert.

Die Verschmierung, also der Abstand zwischen den Anfangspunkten 17, 17' bzw. den Endpunkten 18, 18', entspricht auf der Ortsachse 14 einer Ortsverschiebung entsprechend dem Produkt aus der Haltezeit T und der Relativgeschwindigkeit v zwischen Druckbogen 5 und Lichtmodulator 4.

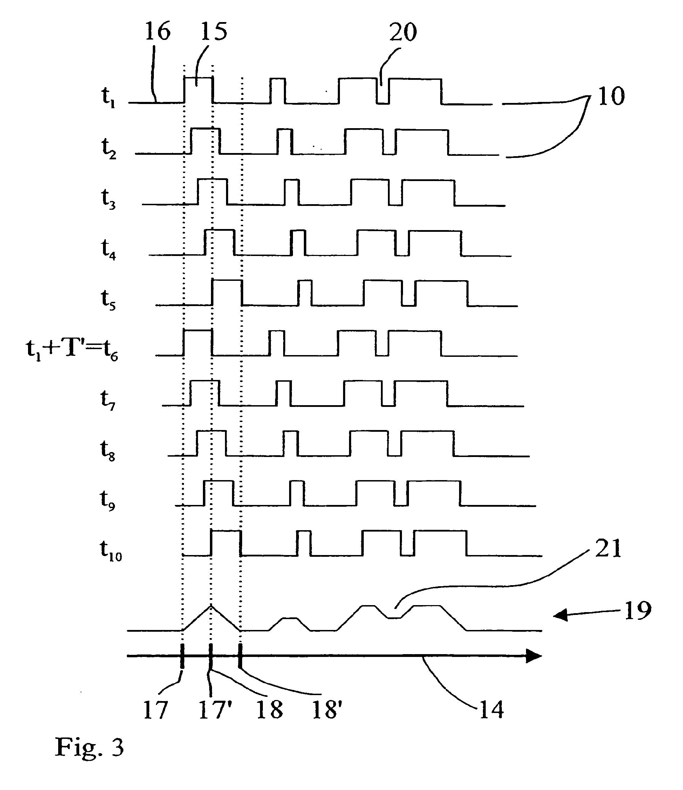

In der Figur 3 ist die gleiche Darstellung wie in Figur 2 gewählt, um einen Aspekt der Erfindung zu verdeutlichen. Gegenüber der Figur 2 unterscheidet sich Figur 3 darin, dass die Haltezeit T' doppelt so groß gewählt ist, wie die Haltezeit T in Figur 2. Dies führt mit Vorteil, wie weiter oben erläutert, zu einer Erhöhung des erzielbaren Durchsatzes bei der Belichtung. Dementsprechend entspricht erst das Belichtungsmuster t₆ dem Belichtungsmuster t₁. Das heißt, erst zum Zeitpunkt t₆ wird auf dem Lichtmodulator 4 das Datenmuster in die nächste Reihe verschoben, sodass die Haltezeit T', während derer die Abbildung 10 auf der Ortsachse 14 des Druckbogens 5 verschoben wird, doppelt so groß ist wie im Falle der Figur 2. Die Belichtungsmuster t₇, t₈, t₉, t₁₀ entsprechen jeweils den Belichtungsmustem t₂, t₃, t₄ bzw. t₅, wobei jedoch bei den Zeitpunkten t₇, t₈, t₉, t₁₀ das Datenmuster auf dem Lichtmodulator 4 um eine Reihe weiter verschoben ist als bei den Zeitpunkten t₁, t₂, t₃, t₄, t₅. Wie bei dem maximal verschobenen Belichtungsmuster t₅ kurz vor dem Umspringen des Datenmusters auf dem Lichtmodulator 4 zum Zeitpunkt t₆ zu erkennen, ist die Verschiebung des beleuchteten Abschnitts 15 entlang der Ortsachse 14 so ausgeprägt, dass die verschobene Anfangsposition 17' des beleuchteten Abschnitts 15 mit der unverschobenen Endposition 18 des beleuchteten Abschnitts 15 zusammenfällt. Dies führt bei Betrachtung der kumulierten Dosis 19 dazu, dass der rechteckige beleuchtete Abschnitt 15 in der kumulierten Dosis tatsächlich als dreieckiger Bereich belichtet wird. Außerdem führt die verstärkte Verschmierung dazu, dass ein schmaler unbeleuchteter Abschnitt 20, welcher in den Belichtungsmustern t₁, ..., t₁₀ entsprechend dem auf dem Lichtmodulator 4 anliegenden Datenmuster vorhanden ist, in dem kumulierten Dosis 19 nur noch als schwach ausgeprägte Vertiefung 21 belichtet wird.

Anhand der Figur 3 wird somit deutlich, dass eine Erhöhung der Haltezeit T nach der Haltezeit T' entsprechend dem Zweifachen der Haltezeit T, zu einer in manchen Anwendungen nicht hinnehmbaren Verschmierung der kumulierten Dosis 19 führt. Eine Erhöhung des Durchsatzes einer Belichtungs- und Modulationsvorrichtung 1 durch Vermindern der Datenrate auf dem Wege der Erhöhung der Haltezeiten T bzw. T' ist daher wegen des Qualitätsverlustes nicht möglich.

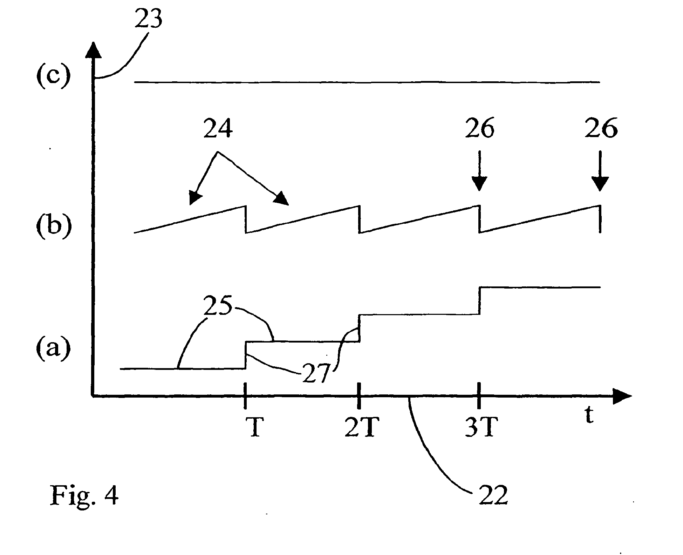

In Figur 4 ist das der Erfindung zugrundeliegende Prinzip veranschaulicht. In Abhängigkeit von der auf der Zeitachse 22 aufgetragenen Zeit t sind auf der vertikalen Ortsachse 23 die Positionen der Abbildung 10 des Lichtmodulators 4 bei erfindungsgemäßer Belichtung (a) relativ zum Lichtmodulator, (b) relativ zur Position des Lichtmodulators gegenüber der Belichtungs- und Modulationsvorrichtung 1 sowie (c) relativ zum Druckbogen dargestellt. Zunächst ist in der Kurve (a) zu erkennen, dass das Bild entsprechend dem bekannten Scrollingverfahren stufenweise über den bekannten Lichtmodulator 4 bewegt wird. Bezüglich dieser Kurve entspricht die Ortsachse 23 einer Achse auf dem Lichtmodulator 4, welche senkrecht zu den Reihen verläuft. Die Stufenweite entspricht in dieser Darstellung der Haltezeit T.

Die Kurve (b) in Figur 4 zeigt die Position der Abbildung 10 des Lichtmodulators 4 im zeitlichen Verlauf relativ zur Position des Lichtmodulators, wobei die Position des Lichtmodulators 4 gegenüber der stationären Belichtungs- und Modulationsvorrichtung 1 gemessen ist. Wie zu erkennen, wird gemäß der Erfindung die Abbildung (c) relativ zur Position des Lichtmodulators periodisch mit einer sägezahnförmigen Bewegungskurve bewegt. Wie zu erkennen, ist die Sägezahnkurve synchronisiert mit den Stufen der Kurve (a), also mit dem reihenweisen Umspringen des Datenmusters auf dem Lichtmodulator 4. Die Synchronisation ist gemäß dem erfindungsgemäßen Verfahren derart gewählt, dass jeweils eine relativ flach ansteigende Flanke 24 während der Halteplateaus 25 des Datenmusters auf dem Lichtmodulator 2 anliegt. Die steil abfallenden Flanken 26, welche in der Figur 4b idealisiert senkrecht dargestellt sind, entsprechend einer unendlichen Geschwindigkeit, sind mit den Stufenkanten 27 des Bewegungsprofils der Datenmuster auf dem Lichtmodulator 4 synchronisiert.

Schließlich ist in der Bewegungskurve (c) in der Figur 4 die Position der Abbildung 10 des Lichtmodulators 4 relativ zum Druckbogen 5 idealisiert veranschaulicht, wenn das erfindungsgemäße Verfahren angewendet wird. Wie zu erkennen, ist die Abbildung 10 auf dem Druckbogen 5 aufgrund der periodischen, sägezahnförmigen Bewegung der Abbildung 10 relativ zum Lichtmodulator 4, welche in Kurve (b) dargestellt ist, völlig stationär. Insbesondere tritt keine Verschmierung auf wie gemäß Stand der Technik anhand der Figuren 2 und 3 veranschaulicht wurde. Aufgrund der nach dem erfindungsgemäßen Verfahren überlagerten Bewegung der Abbildung 10 gegenüber dem Lichtmodulator 4 wird somit die Verschmierung auf der Druckplatte 5 während der Haltezeiten des Datenmusters auf dem Lichtmodulator 4 kompensiert. Die Kompensation ist in dem idealisierten Fall einer Sägezahnkurve gemäß Figur 4(b) mit senkrecht abfallenden Flanken 26 vollkommen. Da erfindungsgemäß keine Verschmierung der Abbildung auf der Druckplatte 5 erfolgt, kann zur Erhöhung des Durchsatzes mit Vorteil die Datenrate, mit welcher die Treiberschaltung 7 Daten auf den Lichtmodulator 4 überträgt, vermindert werden, obwohl dies zwangsläufig zur Erhöhung der Haltezeit T führt.

Um die in Figur 4(b) dargestellte Bewegung der Abbildung 10 gegenüber dem Lichtmodulator 4 technisch zu erzeugen, kann in bevorzugter Ausführung der Erfindung die Kerr-Zelle 12 in den Abbildungsstrahlengang 11 vor oder hinter der Linse angeordnet werden. Durch Variierung der Spannungsquelle 13 wird der Brechungsindex in der Kerr-Zelle 12 in Abhängigkeit von der anliegenden Spannung verändert. Hierdurch wird die Abbildung 10 des Lichtmodulators 4 gegenüber dem Lichtmodulator 4 verschoben.

Wenn die Spannung der Spannungsquelle 13 einen dem Sägezahnprofil gemäß Figur 4(b) angenäherten Verlauf hat, wird das Abbild 10 relativ zur Druckplatte 5 nahezu vollständig stationär sein, wie idealisiert in der Kurve 4 (c) veranschaulicht.

Falls es nicht gelingt, das Bewegungsprofil der Abbildung 10 exakt dem Sägezahn gemäß Figur 4(b) anzunähern, insbesondere falls die steil abfallende Flanke 26 in der Praxis deutlich weniger steil abfallend gestaltbar ist, kann die Lichtquelle 2 während der abfallenden Flanke 26 ausgeschaltet werden, um eine Verschmierung der Abbildung 10 auf der Druckplatte 5 zu vermeiden. Ebenfalls kann über die Treiberschaltung 7 während der abfallenden Flanken 26 der Lichtmodulator 4 vollständig inaktiv geschaltet werden, mit dem gleichen Erfolg wie das Abschalten der Lichtquelle 2.

Die erfindungsgemäße Relativbewegung gemäß dem Bewegungsprofil nach Figur 4(b) kann technisch ebenfalls realisiert werden, indem der Lichtmodulator 4 gegenüber der stationären Belichtungs- und Modulationsvorrichtung 1 mechanisch bewegt wird, insbesondere durch einen piezoelektrischen Antrieb. Es kann auch die Positioniereinrichtung 6 mit einem zusätzlichen Antrieb versehen sein, welcher ein zusätzliches Bewegungsprofil gemäß Figur 4(b) dem lichtempfindlichen Material 5 aufprägt.

Schließlich kann das anhand der Figuren 2 und 3 bei herkömmlichen Belichtungsvorrichtungen auftretende Problem der Verschiebung erfindungsgemäß gelöst werden, indem die Lichtquelle 2 gepulst betrieben wird, sodass eine Belichtung der Druckplatte 5 nicht während des gesamten Halteplateaus 25 gemäß Figur 4(a) erfolgt.

Somit ist nach der Erfindung ein Verfahren und eine Vorrichtung vorgeschlagen, mit welcher das prinzipiell nach Stand der Technik auftretende Problem der Verschmierung der kumulierten Dosis 19 auf der Druckplatte 5 abgeschwächt oder behoben wird, was zu einer Qualitätsverbesserung einerseits und zur Möglichkeit der Durchsatzerhöhung durch Verminderung der Datenübertragungsrate andererseits führt.

### BEZUGSZEICHENLISTE

- 1: Belichtungs- und Modulationsvorrichtung
- 2: Lichtquelle
- 3: Linse
- 4: Lichtmodulator
- 5: lichtempfindliches Material
- 6: Positioniereinrichtung
- 7: Treiberschaltung
- 8: Zellen
- 9: Linse
- 10: Abbildung
- 11: Abbildungsstrahlengang
- 12: Kerrzelle
- 13: variable Spannungsquelle
- 14: Ortsachse
- 15: beleuchteter Abschnitt
- 16: unbeleuchteter Abschnitt
- 17: Anfangsposition
- 17': verschobene Anfangsposition
- 18: Endposition
- 18': verschobene Endposition
- 19: kumulierte Dosis
- 20: schmaler unbeleuchteter Bereich
- 21: Vertiefung
- 22: Zeitstrahl
- 23: Ortsachse
- 24: flach ansteigende Flanke
- 25: Halteplateau
- 26: steil abfallende Flanke
- 27: Stufenkante

## Patentansprüche

1. Verfahren zur Belichtung von Druckplatten (5), bei dem Licht aus einer Lichtquelle (2) auf einem zweidimensionalen Lichtmodulator (4) mit einer Vielzahl von Reihen aus lichtmodulierenden Zellen (8) abgebildet wird und von diesem moduliert wird, wonach der Lichtmodulator (4) über einen Abbildungsstrahlengang (11) auf lichtempfindliches Material (5) abgebildet wird, wobei das lichtempfindliche Material (5) im wesentlichen senkrecht zu der Richtung der Reihen aus lichtmodulierenden Zellen (8) relativ zum Lichtmodulator (4) mit einer Relativgeschwindigkeit bewegt wird und wobei die auf dem lichtempfindlichen Material (5) abzubildenden Datenmuster beginnend in der ersten benutzten Reihe des Lichtmodulators (4) nacheinander in jeder Reihe jeweils während einer Haltezeit (T, T') angezeigt und anschließend zu der jeweils folgenden Reihe des Lichtmodulators (4) verschoben werden, bis Datenmuster aus der letzten benutzten Reihe herausgeschoben werden, mit einer Verschieberate, durch welche die Abbildung (10) eines gegebenen Datenmusters im Mittel stationär relativ zu dem lichtempfindlichen Material (5) gehalten wird, **dadurch gekennzeichnet, dass** die Verschieberate so gewählt ist, daß der Quotient aus der Relativgeschwindigkeit und dem Produkt der Verschieberate und der Höhe der lichtmodulierenden Zellen mindestens zwei, insbesondere zwei, beträgt.

2. Verfahren nach Anspruch 1,**dadurch gekennzeichnet, dass** die Abbildung (10) des Datenmusters während der Haltezeit (T, T') relativ zu dem lichtempfindlichen Material (5) im wesentlichen stationär gehalten wird.

3. Verfahren nach Anspruch 1 oder 2, **dadurch gekennzeichnet, dass** die Relativbewegung zwischen dem Lichtmodulator (4) und dem lichtempfindlichen Material (5) während der Haltezeit im Wesentlichen ausgeglichen wird.

4. Verfahren nach Anspruch3, **dadurch gekennzeichnet, dass** die Abbildung (10) des Datenmusters relativ zum Lichtmodulator (4) mit einem periodischen Bewegungsprofil bewegt wird.

5. Verfahren nach Anspruch 3 oder 4, **dadurch gekennzeichnet, dass** das Bewegungsprofil in einer Orts-Zeit-Darstellung eine flach ansteigende Flanke (24) und eine steil abfallende Flanke (26), insbesondere eine Sägezahnform, aufweist.

6. Verfahren nach Anspruch5, **dadurch gekennzeichnet, dass** das Bewegungsprofil mit der Verschiebung der Datenmuster zwischen den Reihen synchronisiert wird, wobei insbesondere die flach ansteigende Flanke (24) während der Haltezeit (T, T') ausgeführt wird.

7. Verfahren nach einem der Ansprüche 3 bis 6, **dadurch gekennzeichnet, dass** die Lichtquelle (2) während der steil abfallenden Flanke (26) ausgeschaltet wird.

8. Verfahren nach einem der Ansprüche 3 bis 7, **dadurch gekennzeichnet, dass** alle lichtmodulierenden Zellen (8) während der steil abfallenden Flanke (26) inaktiv geschaltet werden.

9. Verfahren nach einem der Ansprüche 3 bis 8, **dadurch gekennzeichnet, dass** der Lichtmodulator (4) mechanisch bewegt, insbesondere gekippt und/oder verschoben, wird, um die Abbildung (10) des Datenmusters zu bewegen.

10. Verfahren nach einem der Ansprüche 3 bis 9, **dadurch gekennzeichnet, dass** der Abbildungsstrahlengang (11) verschoben wird, um die Abbildung (10) des Datenmusters zu bewegen.

11. Verfahren nach Anspruch 10, **dadurch gekennzeichnet, dass** eine elektrische Spannung (13) unter Ausnutzung eines elektrooptischen Effekts, insbesondere des Kerr-Effekts, variiert wird, um den Abbildungsstrahlengang (11) zu verschieben.

12. Verfahren nach Anspruch 10 oder 11, **dadurch gekennzeichnet, dass** ein Umlenkspiegel und/oder eine Linse (9) und/oder ein Prisma und/oder eine Keilplatte mechanisch bewegt wird, um den Abbildungsstrahlengang zu verschieben.

13. Verfahren nach einem der Ansprüche 10 bis 12, **dadurch gekennzeichnet, dass** ein dispersives Element im Abbildungsstrahlengang (11) angeordnet wird und die Wellenlänge der Lichtquelle moduliert wird, um den Abbildungsstrahlengang (11) zu verschieben.

14. Verfahren nach einem der vorhergehenden Ansprüche, **dadurch gekennzeichnet, dass** das lichtempfindliche Material (5) mechanisch bewegt wird, um die Abbildung (10) des Datenmusters zu bewegen.

15. Verfahren nach einem der vorhergehenden Ansprüche, **dadurch gekennzeichnet, dass** die Haltezeit (T, T') kleiner gewählt wird als der Kehrwert der Verschieberate.

16. Verfahren nach Anspruch 15, **dadurch gekennzeichnet, dass** die Lichtquelle (2) gepulst betrieben wird und/oder der Lichtmodulator (4) periodisch inaktiv geschaltet wird, um die Haltezeit (T, T') zu reduzieren.

## Claims

1. Method for illuminating pressure plates (5), in which light from a light source (2) is imaged on a two-dimensional light modulator (4) having a plurality of rows of light-modulated cells (8) and is modulated by said light modulator, the light modulator (4) subsequently being imaged onto light-sensitive material (5) via an imaging beam path (11), the light-sensitive material (5) being moved at a relative speed relative to the light modulator (4) substantially perpendicular to the direction of the rows of light-modulated cells (8), and the data pattern to be imaged on the light-sensitive material (5) being displayed in each row in succession for a respective holding time (T, T') starting in the first used row of the light modulator (4) and subsequently being displaced to the following row of the light modulator (4), until data patterns are displaced out of the last used row at a displacement rate which keeps the image (10) of a given data pattern in the centre stationary relative to the light-sensitive material (5), **characterised in that** the displacement rate is selected so that the quotient of the relative speed and the product of the displacement rate and the height of the light-modulated cells is at least two, in particular three.

2. Method according to claim 1, **characterised in that** the image (10) of the data pattern is held substantially stationary relative to the light-sensitive material (5) during the holding time (T, T').

3. Method according to either claim 1 or claim 2, **characterised in that** the relative movement between the light modulator (4) and the light-sensitive material (5) during the holding time is substantially compensated.

4. Method according to claim 3, **characterised in that** the image (10) of the data pattern is moved relative to the light modulator (4) with a periodic movement profile.

5. Method according to either claim 3 or claim 4, **characterised in that** the movement profile comprises a planar rising edge (24) and a precipitous edge (26), in particular a saw tooth shape, in a spatiotemporal representation.

6. Method according to claim 5, **characterised in that** the movement profile is synchronised with the displacement of the data patterns between the rows, wherein in particular the planar rising edge (24) is formed during the holding time (T, T').

7. Method according to any one of claims 3 to 6, **characterised in that** the light source (2) is switched off during the precipitous edge (26).

8. Method according to any one of claims 3 to 7, **characterised in that** all of the light-modulated cells (8) are deactivated during the precipitous edge (26).

9. Method according to any one of claims 3 to 8, **characterised in that** the light modulator (4) is moved mechanically, in particular tilted and/or displaced, in order to move the image (10) of the data pattern.

10. Method according to any one of claims 3 to 9, **characterised in that** the imaging beam path (11) is displaced in order to move the image (10) of the data pattern.

11. Method according to claim 10, **characterised in that** an electric voltage (13) is varied, exploiting an electro-optical effect, in particular the Kerr effect, in order to displace the imaging beam path (11).

12. Method according to either claim 10 or claim 11, **characterised in that** a deflecting mirror and/or a lens (9) and/or a prism and/or a wedge plate is moved mechanically in order to displace the imaging beam path.

13. Method according to any one of claims 10 to 12, **characterised in that** a dispersive element is arranged in the imaging beam path (11) and the wavelength of the light source is modulated in order to displace the imaging beam path (11).

14. Method according to any one of the preceding claims, **characterised in that** the light-sensitive material (5) is moved mechanically in order to move the image (10) of the data pattern.

15. Method according to any one of the preceding claims, **characterised in that** the holding time (T, T') is selected to be less than the reciprocal of the displacement rate.

16. Method according to claim 15, **characterised in that** the light source (2) is operated in a pulsed manner and/or the light modulator (4) is periodically deactivated in order to reduce the holding time (T, T').

## Revendications

1. Procédé d'exposition de plaques d'impression (5), dans lequel la lumière provenant d'une source lumineuse (2) est reproduite sur un modulateur de lumière bidimensionnel (4) ayant une multitude de rangées de cellules modulant la lumière (8) et est modulée par celui-ci, le modulateur de lumière (4) étant reproduit sur le matériel photosensible (5) par le biais d'une trajectoire du faisceau de reproduction (11), le matériau photosensible (5) se déplaçant sensiblement perpendiculairement à la direction des rangées de cellules modulant la lumière (8) avec une vitesse relative par rapport au modulateur de lumière (4) et les motifs de données à reproduire sur le matériau photosensible (5) étant affichés les uns après les autres, en commençant dans la première rangée utilisée du modulateur de lumière (4), dans chaque rangée à chaque fois durant un temps de maintien (T, T') et ensuite décalés dans la rangée suivante respective du modulateur de lumière (4) jusqu'à ce que les motifs de données soient sortis par décalage de la dernière rangée utilisée, avec une vitesse de décalage par le biais de laquelle la reproduction (10) d'un motif de données donné est maintenu en moyenne stationnaire par rapport au matériau photosensible (5), **caractérisé en ce que** la vitesse de décalage est choisie de sorte que le quotient de la vitesse relative et du produit de la vitesse de décalage par la hauteur des cellules modulant la lumière soit au moins deux, en particulier deux.

2. Procédé selon la revendication 1, **caractérisé en ce que** la reproduction (10) du motif de données durant le temps de maintien (T, T') est maintenu sensiblement stationnaire par rapport au matériau photosensible (5).

3. Procédé selon la revendication 1 ou 2, **caractérisé en ce que** le mouvement relatif entre le modulateur de lumière (4) et le matériau photosensible (5) durant le temps de maintien est sensiblement compensé.

4. Procédé selon la revendication 3, **caractérisé en ce que** la reproduction (10) du motif de données est déplacée relativement au modulateur de lumière (4) avec un profil de déplacement périodique.

5. Procédé selon la revendication 3 ou 4, **caractérisé en ce que** le profil de déplacement présente dans une représentation lieu-temps un front montant plat (24) et un front descendant raide (26), en particulier une forme de dent de scie.

6. Procédé selon la revendication 5, **caractérisé en ce que** le profil de déplacement est synchronisé avec le décalage des motifs de données entre les rangées, en particulier le front montant plat (24) étant exécuté durant le temps de maintien (T, T').

7. Procédé selon l'une des revendications 3 à 6, **caractérisé en ce que** la source lumineuse (2) est éteinte durant le front descendant raide (26).

8. Procédé selon l'une des revendications 3 à 7, **caractérisé en ce que** toutes les cellules modulant la lumière (8) sont inactivées durant le front descendant raide (26).

9. Procédé selon l'une des revendications 3 à 8, **caractérisé en ce que** le modulateur de lumière (4) est déplacé mécaniquement, en particulier est basculé et/ou décalé afin de déplacer la reproduction (10) du motif de données.

10. Procédé selon l'une des revendications 3 à 9, **caractérisé en ce que** la trajectoire du faisceau de reproduction (11) est décalée afin de déplacer la reproduction (10) du motif de données.

11. Procédé selon la revendication 10, **caractérisé en ce qu'**une tension électrique (13) est variée en employant un effet électro-optique, en particulier un effet de Kerr, afin de décaler la trajectoire du faisceau de reproduction (11).

12. Procédé selon la revendication 10 ou 11, **caractérisé en ce qu'**un miroir de déviation et/ou une lentille (9) et/ou un prisme et/ou une clavette est déplacée mécaniquement pour décaler la trajectoire du faisceau de reproduction.

13. Procédé selon l'une des revendications 10 à 12, **caractérisé en ce qu'**un élément dispersif est disposé dans la trajectoire du faisceau de reproduction (11) et que la longueur d'onde de la source lumineuse est modulée afin de décaler la trajectoire du faisceau de reproduction (11).

14. Procédé selon l'une quelconque des revendications précédentes, **caractérisé en ce que** le matériau photosensible (5) est déplacé mécaniquement afin de déplacer la reproduction (10) du motif de données.

15. Procédé selon l'une quelconque des revendications précédentes, **caractérisé en ce que** le temps de maintien (T, T') est choisi inférieur à la valeur inverse de la vitesse de décalage.

16. Procédé selon la revendication 15, **caractérisé en ce que** la source lumineuse (2) est commandée par des impulsions et/ou le modulateur de lumière (4) est coupé périodiquement afin de réduire le temps de maintien (T, T').
